# EUROPÄISCHE PATENTANMELDUNG

(11) **EP 1 271 860 A2**
(43) Veröffentlichungstag der Anmeldung: **02.01.2003**
(21) Anmeldenummer: 02100349.6
(22) Anmeldetag: 08.04.2002
(51) Int. Cl.: H04L 12/56

(54) **Paketvermittlungsvorrichtung mehrstufiger Netzwerke mit einer verteilten Vermittlung und pufferloser Koppelmatrix**

(30) Priorität: 10.04.2001 DE 10117788
(71) Anmelder: Philips Corporate Intellectual Property GmbH, 20099 Hamburg (DE); Koninklijke Philips Electronics N.V., 5621 BA Eindhoven (NL)
(72) Erfinder: van Wageningen, Andries, 52066 Aachen (DE); Reumerman, Hans-Jürgen, 52066 Aachen (DE); Lelkens, Armand, Dr., 52066 Aachen (DE)
(74) Vertreter: Volmer, Georg, Dipl.-Ing.

(57) **Zusammenfassung**

Die Erfindung bezieht sich eine Paketvermittlungsvorrichtung mit einem Koppelfeld bestehend aus mehreren pufferlosen Koppelmatrizen und zu einem Netzwerk geschalteten, jeweils einer Koppelmatrix zugeordneten Vermittlungssteuerungen, und jeweils der Ausgang einer Vermittlungssteuerung mit allen Eingängen aller parallel geschalteten, in der nachfolgenden Reihe angeordneten Vermittlungssteuerungen verbunden ist.

## Beschreibung

Die Erfindung bezieht sich auf eine Paketvermittlungsvorrichtung mit einem Koppelfeld.

In der Veröffentlichung "Weighted Arbitration Algorithms with Priorities for Input-Queued Switches with 100% Throughput" von R. Schoenen, G. Post, G. Sander, Broadband Switching Symposium '99, werden verschiedene, gswichtete Vermittlungsalgorithmen einer Paketvermittlungsvorrichtung verglichen. Die Vermittlungsalgorithmen versuchen mit unterschiedlichen Vermittlungsschritten eine Kollision mehrerer für den selben Ausgangsport der Paketvermittlungsvorrichtung bestimmter Pakete zu verhindern und daraus resultierenden Datenverlust oder Verzögerung zu reduzieren.

Der Erfindung liegt die Aufgabe zugrunde, eine kollisionsfreie Vermittlung von Daten in Form von Paketen zu gewährleisten.

Die Aufgabe wird durch eine Paketvermittlungsvorrichtung mit einem Koppelfeld bestehend aus mehreren pufferlosen Koppelmatrizen und zu einem Netzwerk geschalteten, jeweils einer Koppelmatrix zugeordneten Vermittlungssteuerungen, die jeweils mindestens
- einen Kennzeichnungs-Analysator zur Kennzeichnung eines Eingangsports in einer einen Paket zugeordneter Routekennzeichnung und zur Speicherung bereits erteilter Verknüpfungen zwischen Eingangsports und Ausgangsports,
- einen Ausgangszuteiler zur Auswertung mit einer Routekennzeichnung verschickter Anfragen,
- einen Kennzeichnungserteilungs-Analysator zur Analyse der Kennzeichnungen der von den Ausgangszuteiler erteilten Anfragen,
- einen Eingangszuteiler zur Auswertung mit Kennzeichnung erteilter Anfragen, und
- einen Ergebnisanalysator zur Information des Kennzeichnungs-Analysators über akzeptierte Verknüpfungen
enthalten und jeweils der Ausgang einer Vermittlungssteuerung mit allen Eingängen aller parallel geschalteten, in der nachfolgenden Reihe angeordneten Vermittlungssteuerungen verbunden ist.

Eine Paketvermittlungsvorrichtung vermittelt die als Pakete am Eingangsport empfangene Signalisierungs- und Nutzdaten zu dem entsprechenden Ausgangsport.

Bei der Generierung einer Routekennzeichnung zur Steuerung des Pakets durch die Paketvermittlungsvorrichtung bedient sich eine für den Eingangsport zuständige Portsteuerung einer Tabelle, in der die für die Routekennzeichnung notwendigen Leitweg- und Prioritätsinformationen enthalten sind. Die Leitweg- und Prioritätsinformationen geben den Ziel-Ausgang der Paketvermittlungsvorrichtung und eine Gewichtung der Anfrage an. Eine Gewichtung kann Angaben über die Priorität und Klasse der Pakete bzw. die Wartzeit oder Größe einer Warteschlange beinhalten.

Die Paketvermittlungsvorrichtung besteht aus mehreren pufferlosen Koppelmatrizen zur Verknüpfung von Eingangsports und Ausgangsports und mehreren Vermittlungssteuerungen zur Initialisierung und Veränderung der Konfiguration der Koppelmatrizen und einigen nach dem FIFO-Verfahren (First In First Out) arbeitenden Register in Form von logischen Warteschlangen.

Die Schnittstelle zwischen der Portsteuerung und der Paketvermittlungsvorrichtung kann entweder aus zwei separaten Leitungen für Signalisierungs- und Nutzdaten bestehen, oder ein Teil der Portsteuerung ist in der Paketvermittlungsvorrichtung integriert und die Signalisierungs- und Nutzdaten werden gemeinsam über eine Leitung gemultiplext übertragen ("in-band control").

Bei der Verwendung einer pufferlosen Koppelmatrix führt eine Kollision mehrerer für den selben Ausgangsport bestimmter Pakete zu einem Verlust von Paketen. Um den Verlust zu verhindern, werden die Pakete in Warteschlangen innerhalb der Portsteuerung zwischengespeichert. Da Zellen konstanter Länge bei der Vermittlung leichter zu handhaben sind als Pakete wechselnder Größe, werden in der Portsteuerung die ankommenden Pakete in Zellen konstanter Länge zerteilt. Nach einer erfolgreichen Vermittlung, d.h. eine akzeptierte Zuordnung jeweils eines Eingangsports mit einem Ausgangsport hat stattgefunden, werden die Zellen aus der Warteschlange entfernt.

Eine Zelle kann entweder gleichzeitig mit der Routekennzeichnung an die Paketvermittlungsvorrichtung verschickt werden oder die Zelle wird separat an die Paketvermittlungsvorrichtung befördert, nachdem die Routekennzeichnung mit einer Anfrage einige Zeit zuvor an der Paketvermittlungsvorrichtung angekommen ist und diese ihre Vorbereitung zum Transfer der Zelle vorgenommen hat.

Die gleichzeitige Versendung von Routekennzeichnung und Zelle wird als "Selfrouting" bezeichnet. Sie hat den Nachteil, dass in der Portsteuerung entschieden wird, welche Zelle vermittelt wird und dadurch eine Kollision der Zellen nicht vermieden werden kann.
Durch eine getrennte Versendung der Routekennzeichnung und der Zelle kann der Verlust aufgrund einer Kollision der Zellen nicht wesentlich vermindert werden.
Eine weitere Möglichkeit besteht darin, die Routekennzeichnung mit mehreren Anfragen an die Paketvermittlungsvorrichtung zu leiten und diese entscheidet welche der Anfragen akzeptiert wird, um dann die Vorbereitung zum Transfer der ausgewählten Zelle vorzunehmen. Diese Möglichkeit bietet eine fast verlustlose Vermittlung der Zellen.

Um die Kapazität der Paketvermittlungsvorrichtung zu erhöhen, werden mehrere Koppelmatrizen parallel betrieben und in einem Netzwerk mit einander verbunden. Die Koppelmatrizen werden einzeln durch jeweils eine Vermittlungssteuerung gesteuert. Zum Konfigurieren der Koppelmatrizen wird ein auf die Vermittlungssteuerungen verteilter Algorithmus verwendet um eine globale Entscheidung der Paketvermittlungsvorrichtung zu erzielen.

Aufgrund der Gewichtung einer Anfrage wird in jeder Vermittlungssteuerung für jeden Ausgang ein Eingang der Vermittlungssteuerung zugeordnet. Dieses Ergebnis dient am Ausgang jeder Vermittlungssteuerung in der Routekennzeichnung als Anfrage für die als nächste Stufe parallel angeordneten Vermittlungssteuerungen.

Im Falle, dass die an der Vermittlungssteuerung aus jedem Eingangsport ankommende Routekennzeichnung mehreren Anfragen (in einer Zell Periode) für unterschiedliche Ausgangsports enthält, wird bei der Vermittlung ein zweifacher Vermittlungsalgorithmus verwendet. Ein Vermittlungsalgorithmus wird benutzt um für jede Ausgangport eine Anfrage aus allen Eingangsports zu wählen, und durch einen zweiten Vermittlungsalgorithmus wird für jeden Eingangsport die erteilte Anfrage eines Ausgangsports bestimmt.

Am Ausgang jeder in der letzten Stufe angeordneten Vermittlungssteuerung liegt ein erster Teil der Vermittlungsentscheidung an. Die Rückführung des ersten Teiles der Vermittlungsentscheidung soll auf den gleichen Pfad in umgekehrter Richtung zurückgeführt werden. Auch während der Rückführung wird aufgrund der Gewichtung einer Anfrage in jeder Vermittlungssteuerung für jeden Eingang ein Ausgang der Vermittlungssteuerung zugeordnet. Am Eingang jeder in der letzten Stufe angeordneten Vermittlungssteuerung liegt ein zweiter Teil der Vermittlungsentscheidung an. Die Vermittlungsentscheidung wir zur Verknüpfung der Eingänge und Ausgänge festgehalten. Durch Iteration dieser Vermittlungen über noch nicht zugewiesene Eingänge kann die Vermittlungsentscheidung verbessert werden.

Da auf dem Pfad vom Eingang der ersten Vermittlungssteuerung zum Ausgang der letzten Vermittlungssteuerung Kollisionen der Routekennzeichnungen auftreten können, muss das Ergebnis des ersten Teils der Vermittlungsentscheidung in umgekehrter Richtung auf dem selben Pfad zurückgeführt werden, damit keine weiteren Verfahren zur Pfaderkennung erforderlich sind. Deshalb ist sowohl die Eingangsportnummer als auch die Ausgangsportnummer in der Routekennzeichnung aufgeführt.

Es zeigen:
- Fig. 1: eine Darstellung einer Paketvermittlungsvorrichtung mit separaten Eingängen der Signalisierungs- und Nutzdaten,
- Fig. 2: eine Darstellung einer Paketvermittlungsvorrichtung mit Eingängen für gemeinsam gemultiplexten Signalisierungs- und Nutzdaten ("in-band control"),
- Fig. 3: Koppelmatrizen mit mehreren zu einem Netzwerk geschalteten Vermittlungssteuerungen,
- Fig. 4: prinzipielle Darstellung der Funktionsweise einer Vermittlungsteuerung
- Fig. 5: prinzipielle Darstellung der Funktionsweise einer Vermittlungsteuerung.

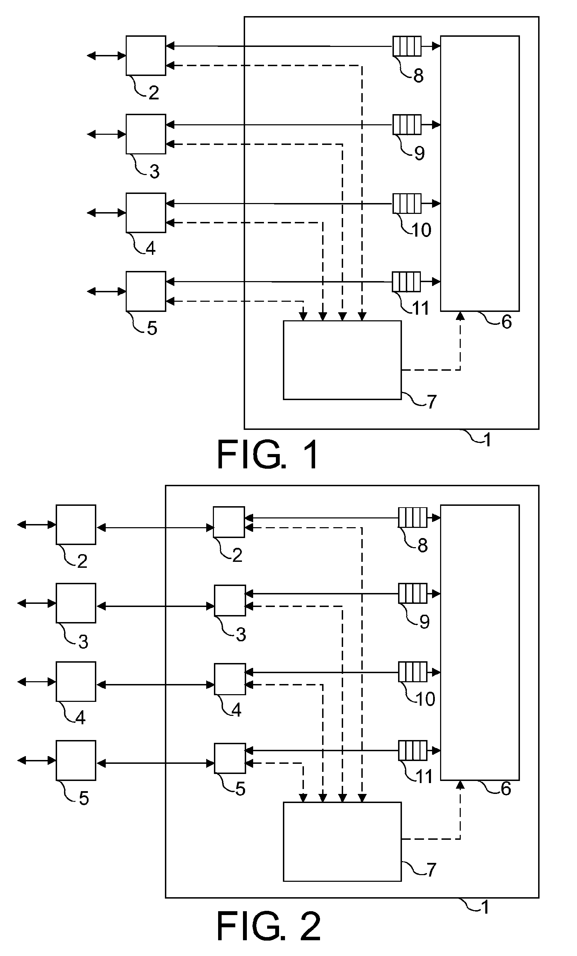

Die in der Fig. 1 dargestellte Paketvermittlungsvorrichtung 1 für den Datentransport von Paketen verbindet eine bestimmte Anzahl von Eingangsports mit den entsprechenden Ausgangsports. Für die an den Eingangsport ankommenden Pakete werden jeweils durch eine Portsteuerung 2 bis 5 anhand von Vermittlungs-Tabellen Informationen wie z.B. eine Route und eine Priorität ermittelt. Nachdem die Pakete in Zellen zerteilt wurden, werden diese zu der zuvor bestimmten Ausgangsleitung der Paketvermittlungsvorrichtung 1 befördert. Die für weitere Vermittlung vorgesehenen Vermittlungsschritte werden im folgenden erläutert.

Die Paketvermittlungsvorrichtung 1 besteht aus einer Koppelmatrix 6, einer Vermittlungssteuerung 7 und einigen nach dem FIFO-Verfahren (First In First Out) arbeitenden Registern 8 bis 11 in Form von logischen Warteschlangen.

Eine alternative Darstellung der Paketvermittlungsvorrichtung 1 wird durch die Fig 2 näher beschrieben. Abweichend zu der in Fig 1 dargestellten Paketvermittlungsvorrichtung 1 wird die Portsteuerung 2 bis 5 in zwei Teile aufgegliedert, wobei ein Teil der Portsteuerung 2 bis 5 jeweils in die Paketvermittlungsvorrichtung integriert ist (für "in-band control"). Resultierend entstehen an der Schnittstelle zwischen dem ersten Teil der Portsteuerung 2 bis 5 und der Paketvermittlungsvorrichtung 1 keine separaten Verbindungen der Signalisierungsund Nutzdaten, sondern eine Verbindung auf der die Signalisierungs- und Nutzdaten gemeinsam zu der Paketvermittlungsvorrichtung 1 gemultiplext und übertragen werden.

Um Zellen weiterzuleiten, generiert die Portsteuerung 2 bis 5 eine Routekennzeichnung mit Informationen zum Eingang und Ziel-Ausgang der Paketvermittlungsvorrichtung und Gewichtung der Anfrage. Eine Gewichtung kann Angaben über die Priorität und Klasse der Pakete bzw. die Wartzeit oder Größe einer Warteschlange beinhalten.

Im folgenden wird die Funktion der Paketvermittlungsvorrichtung bei einer gemeinsamen Versendung der Routekennzeichnung und der Zelle beschrieben. Die Portsteuerung 2 bis 5 leitet die Zelle gleichzeitig mit der Routekennzeichnung an die Paketvermittlungsvorrichtung 1. Innerhalb der Paketvermittlungsvorrichtung wird die Routekennzeichnung zu der Vermittlungssteuerung 7 weitergeleitet und die zugehörige Zelle zu der Koppelmatrix, bei der sie in nach den FIFO-Verfahren (First In First Out) arbeitendes Register 8 bis 11 eingefügt wird.

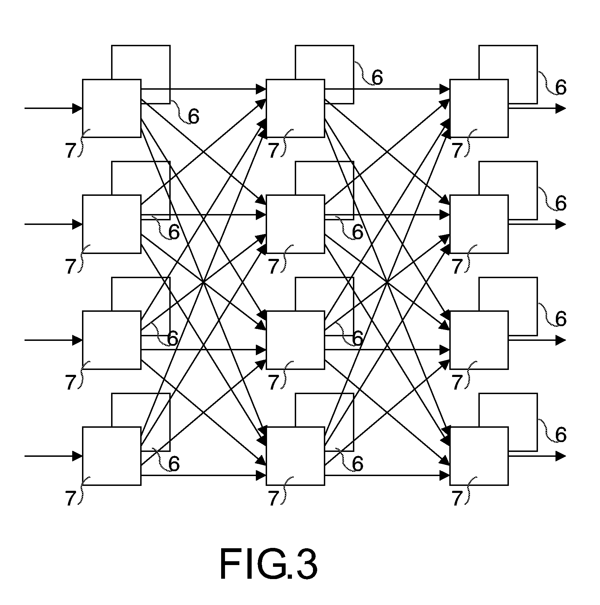

Durch die Vernetzung der Vermittlungssteuerungen wie in Fig 3 dargestellt, können Leistungsparameter der Vermittelungsvorrichtung, wie z.B. Verzögerung der Pakete durch die Vermittlung und Länge der Warteschlangen, reduziert werden. In diesem Beispiel werden jeweils drei Vermittlungssteuerungen 7 in Reihe geschaltet und jeweils vier parallel betrieben, so dass sich die in Fig 3 dargestellte Netzwerk mit den entsprechenden Verbindungen entsteht. Dabei wird jeweils der Ausgang jeder Vermittlungssteuerung 7 an jeden Eingang der in der folgenden Spalte liegenden Vermittlungssteuerungen 7 verbunden.

Auf diese Weise wird das Ergebnis der Vermittlung der ersten in einer Reihe liegender Vermittlungssteuerung 7 auf alle in der folgenden Spalte liegenden Vermittlungssteuerungen 7 verteilt und dient als eine anfragende Routekennzeichnung in den folgenden Vermittlungssteuerungen 7. Am Ausgang der in der letzten Spalte liegenden Vermittlungsvorrichtungen 7 steht das erste Teil der Vermittlungsentscheidung fest. Der erste Teil der Vermittlungsentscheidung wird zurückgeführt, damit in der Rückrichtung auf ähnliche Weise der zweite Teil der Vermittlungsentscheidung erzeugt werden kann. Ein entgültiges Resultat einer Iteration wird von den in der ersten Spalte des Netzwerks angeordneten Vermittlungssteuerungen festgelegt und weiter an die Portsteuerung 2 bis 5 geleitet. Damit das entgültige Resultat in den Vermittlungssteuerungen festgehalten wird, muss es nochmals an das Netzwerk der Vermittlungssteuerungen geschickt werden.

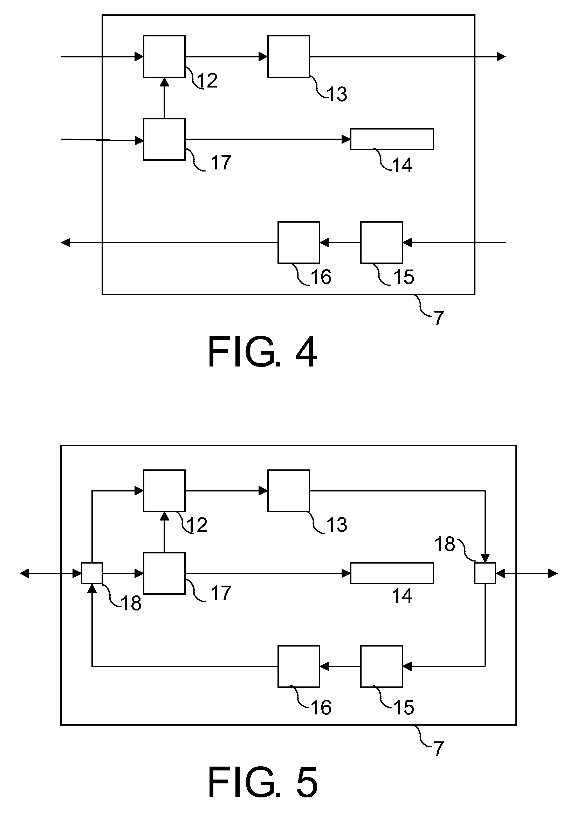

Die Funktion der in Fig 1 bis 3 dargestellten Paketvermittlungsvorrichtung 1 wird mit Hilfe der in Fig 4 bis 5 gezeigten Diagramme näher erläutert.

Die in Fig 3 dargestellte Vermittlungssteuerung 7 beinhaltet einen Kennzeichnungs-Analysator 12, einen Ausgangszuteiler 13, eine Konfigurationseinheit 14 und Ergebnisanalysator 17 als für die Vorwärtsrichtung notwendige Komponenten, sowie einen Kennzeichnungserteilungs-Analysator 15, einen Eingangszuteiler 16 für die Rückwertsrichtung.

Die Portsteuerung 2 bis 5 generiert die Routekennzeichnung, welche alle Ziel-Ausgangsnummer der Paketvermittlungsvorrichtung, mehrere Anfragen und die zu gehörigen Gewichtungen enthält. Die Routekennzeichnung wird weiter an die Vermittlungssteuerung 7 geleitet, wobei die Zelle in der Portsteuerung 2 bis 5 verbleiben und zu einem späteren Zeitpunkt vermittelt werden.

Innerhalb der Vermittlungssteuerung 7 speichert der Kennzeichnungs-Analysator 12 das durch einen Refresh 21 verstärkte Signal der Routekennzeichnung, um diese zu einem späteren Zeitpunkt bei der Ausführung iterativer Vermittlungsschritte zu verwenden.

Die folgenden Vermittlungsschritte werden iterativ wiederholt.
- Die in den zuvor ausgeführten iterativen Vermittlungsschritten abgearbeiteten Anfragen, d.h. die bereits erteilten Verknüpfungen zwischen den Eingangsports und den Ausgangsports der Paketvermittlungsvorrichtung, werden von dem Kennzeichnungs-Analysator 12 gespeichert. Die Routekennzeichnung für alle nicht vermittelten Eingänge wird zu dem zuständigen Ausgangszuteiler 13 weitergeleitet.
- Für jeden Ausgangsport ist ein einzelner Ausgangszuteiler 13 zuständig, der alle vom Kennzeichnungs-Analysator 12 kommenden Anfragen bearbeitet. Aufgrund der Gewichtung der Routekennzeichnung entscheidet der Ausgangszuteiler 13, welche der Anfragen akzeptiert wird. Die ausgewählte Routekennzeichnung wird zu der Vermittlungssteuerung der nächsten Stufe des Netzwerks weitergeleitet.
- Am Ausgang der letzten in der letzten Stufe angeordneten Vermittlungssteuerung 7 wird die Routekennzeichnung zurückgeführt und an den Kennzeichnungserteilungsanalysator 15 übermittelt.
- Der Kennzeichnungserteilungs-Analysator 15 übergibt die Routekennzeichnung dem zuständigen Eingangszuteiler 16.
- Für jeden Eingangsport ist ein Eingangszuteiler 16 zuständig, der das vom Kennzeichnungs-Analysator 15 kommende Ergebnis für den entsprechenden Eingangsport bearbeitet. Aufgrund der Gewichtung der Routekennzeichnung entscheidet der Eingangszuteiler 16, welche der Zuordnungen akzeptiert wird Das gewählte Ergebnis wird an die Vermittlungssteuerung 7 in der vorigen Stufe des Netzwerks übergeben.
- In der Vermittlungssteuerung 7 der ersten Stufe wird das Ergebnis dem Ergebnisanalysator 17 und der Konfigurationseinheit 14 übergeben, dann an die Portsteuerung 2 bis 5 weitergeleitet und der Vermittlungssteuerung 7 der nächsten Stufe übermittelt, so dass alle betroffenen Vermittlungssteuerungen 7 über das Ergebnis informiert werden.
- Der Ergebnis- Analysator 17 informiert den Kannzeichnungs-Analysator 12 über die akzeptierten Ergebnisse.

In der Konfigurationseinheit 14 werden die erteilten Routekennzeichnungen des Ergebnis-Analysators 17 zusammen getragen, bevor die Konfigurationseinheit 14 sie zu den Konfigurationsregistern der Koppelmatrix 6 verschickt. Im nächsten Schritt wird die Vermittlungsvorrichtung 1 entsprechend neu konfiguriert, um die Zellen zu übertragen.

Nachdem die anfragende Portsteuerung 2 bis 5 die veränderte Routekennzeichnung erhalten hat, werden zu diesem Zeitpunkt erst die Zellen an die Koppelmatrix 6 verschickt und anschließend aus der Warteschlange entfernt.

Da die Eingangs- und Ausgangsportnummer als Information in der Routekennzeichnung enthalten sind, kann diese Information bei der Pfaderkennung genutzt werden und die Routekennzeichnung innerhalb des selben Pfades zur entsprechenden Portsteuerng zurückgeschickt werden. Um dabei die Anzahl der als physikalische Ein- und Ausgänge dienenden Pins zu reduzieren, werden bidirektional Ein- und Ausgänge in der erfindungsgemäßen Beispielausführung der Vermittlungssteuerung 7 verwendet. Die in Fig 5 dargestellte Ausführung entspricht inhaltlich und funktional dem in Fig. 4 vorgestellten Beispiel und wird lediglich durch zwei bidirektionale Ein- und Ausgangs 18 ergänzt.

## Patentansprüche

1. Paketvelmittlungsvorrichtung mit einem Koppelfeld bestehend aus mehreren pufferlosen Koppelmatrizen (6) und mehreren zu einem Netzwerk geschalteten, jeweils einer Koppelmatrix (6) zugeordneten Vermittlungssteuerungen (7), die jeweils mindestens
- einen Kennzeichnungs-Analysator (12) zur Kennzeichnung eines Eingangsports in einer einen Paket zugeordneter Routekennzeichnung und zur Speicherung bereits erteilter Verknüpfungen zwischen Eingangsports und Ausgangsports,
- einen Ausgangszuteiler (13) zur Auswertung mit einer Routekennzeichnung verschickter Anfragen,
- einen Kennzeichnungserteilungs-Analysator (15) zur Analyse der Kennzeichnungen der von den Ausgangszuteiler erteilter Anfragen,
- einen Eingangszuteiler (16) zur Auswertung Kennzeichnung erteilter Anfragen, und
- einen Ergebnisanalysator (17) zur Information des Kennzeichnungs-Analysators (12) über akzeptierte Verknüprungen
enthalten und jeweils der Ausgang einer Vermittlungssteuerung (7) mit Eingängen aller parallel geschalteten, in der nachfolgenden Reihe angsordneten Vermittlungssteuerungen (7) verbunden ist.

2. Paketvermittlungsvorrichtung nach Anspruch 1
**dadurch gekennzeichnet,**
**dass** die Routekennzeichnung zur einer für die Generierung der Routekennzeichnung zuständigen Portsteuerung (2 bis 5), durch alle zuvor durchlaufenen Vermittlungssteuerungen (7) zurückgeführt wird.

3. Paketvermittlungsvorrichtung nach Anspruch 1
**dadurch gekennzeichnet,**
**dass** die Routekennzeichnung Leitweg- und Prioritätsinformationen enthält.

4. Paketvermittlungsvorrichtung nach Anspruch 1
**dadurch gekennzeichnet,**
**dass** die Vermittlungssteuerungen (7) über bidirektionale Ein- und Ausgange verfügen.

5. Paketvermittlungsvorrichtung nach Anspruch 1
**dadurch gekennzeichnet,**
**dass** das Koppelfeld über gemultiplexte Signalisierungs- und Nutzdaten Verbindungen mit mehreren Eingangsports verbunden ist.
